(19) Europäisches Patentamt
European Patent Office
Office européen des brevets

(11) Veröffentlichungsnummer: **0 187 621**
**B1**

(12) # EUROPÄISCHE PATENTSCHRIFT

(45) Veröffentlichungstag der Patentschrift: **11.10.89**

(51) Int. Cl.⁴: **C 09 B 41/00**, C 09 B 63/00, C 09 B 45/00

(21) Anmeldenummer: **85810616.4**

(22) Anmeldetag: **24.12.85**

(54) **Verfahren zur Herstellung von metallisierbaren Azofarbstoffen.**

(30) Priorität: **08.01.85 CH 49/85**

(43) Veröffentlichungstag der Anmeldung: **16.07.86 Patentblatt 86/29**

(45) Bekanntmachung des Hinweises auf die Patenterteilung: **11.10.89 Patentblatt 89/41**

(84) Benannte Vertragsstaaten: **BE CH DE FR GB LI**

(56) Entgegenhaltungen:
**DE-A- 3 336 247**
**DE-C- 175 827**
**US-A- 2 424 066**

(73) Patentinhaber: **CIBA-GEIGY AG**
**Klybeckstrasse 141**
**CH-4002 Basel (CH)**

(72) Erfinder: **Wittwer, Christian, Dr.**
**Im Erlisacker 5**
**CH-4103 Bottmingen (CH)**
Erfinder: **Rahn, Dieter Hartmut, Dr.**
**Leuengasse 10/1**
**CH-4057 Basel (CH)**
Erfinder: **Ruhlmann, Edmond, Dr.**
**Rue de Buschwiller 1**
**F-68300 Saint-Louis (FR)**
Erfinder: **Parisot, Daniel**
**Bellevue D 52, rue des collonges**
**F-69230 Saint-Genis-Laval (FR)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 187 621 B1

**Beschreibung**

Die Kupplung von diazotierten o-Hydroxyaminobenzolen oder o-Aminonaphtholen auf Phenole oder Naphthole, die in o-Stellung zur Hydroxygruppe kuppeln, verläuft in wässriger Lösung oft langsam und mit unbefriedigenden Ausbeuten. Es wurde versucht, die Kupplungsausbeute durch Zusätze von Zinksalzen zu verbessern. Diese begünstigen tatsächlich die Kupplung jedoch ist diese Methode wegen der komplizierten Abwasseraufbereitung die infolge des Zinkgehaltes nötig wird, mit hohen Kosten verbunden.

Das erfindungsgemässe diskontinuierliche Verfahren zur Herstellung von Azofarbstoffen der Formel

$$\begin{array}{c}OH\\|\\A\end{array} - N = N - \begin{array}{c}OH\\|\\B\end{array}$$

worin A—OH der Rest eines durch Chlor, Nitro, $C_2$-$C_6$-Alkanoylamino, $C_2$-$C_6$-Alkoxycarbonylamino, $C_1$-$C_6$-Alkyl, $C_1$-$C_6$-Alkoxy, Sulfo, Sulfonamid oder Sulfongruppen substituierten Phenols oder der Rest eines durch Chlor, Brom, Nitro, Sulfo, Sulfonamid oder Sulfongruppen substituierten Naphthols ist, und B—OH der Rest eines durch $C_1$-$C_6$-Alkyl und/oder $C_2$-$C_6$-Alkanoylamino oder $C_2$-$C_6$-Alkoxycarbonylamino substituierten Phenols oder der Rest eines durch Chlor, —$NH_2$, $C_2$-$C_6$-Alkanoylamino, $C_2$-$C_6$-Alkoxycarbonylamino, Sulfo, Sulfonamid oder Sulfongruppen substituierten Naphthols ist, wobei diese Reste in o-Stellung zu den Hydroxygruppen an die Azogruppe gebunden sind, ist dadurch gekennzeichnet, dass man in wässriger Lösung ein Amin der Formel

$$\begin{array}{c}OH\\|\\A\end{array} - NH_2$$

diazotiert und in Gegenwart von 0,1 bis 1,0 Aequivalenten von $Ca^{2+}$- und/oder $Mg^{2+}$-Ionen auf eine Kupplungskomponente der Formel

$$H - \begin{array}{c}OH\\|\\B\end{array}$$

kuppelt, wobei der pH-Wert, für den Fall, dass B eine Sulfogruppe enthält, zwischen 8 und 10 und für den Fall, dass B keine Sulfogruppe trägt, nicht oberhalb 11,5 liegt. Hierbei können entweder nur $Ca^{2+}$- oder $Mg^{2+}$-Ionen eingesetzt werden oder aber ein Gemisch derselben.

Die Verwendung von Calciumhydroxid oder Magnesiumhydroxid bei einzelnen Kupplungsreaktionen ist zwar bereits beschrieben, jedoch wurden diese jeweils im Ueberschuss eingesetzt, um einen hohen pH-Wert des Reaktionsgemisches einzustellen, wie z. B. in der DE-B-411 582, DE-C-175 827 oder in der US-A-2 424 066 beschrieben. Bei dieser Arbeitsweise ergab sich ein pH-Wert von ca. 12 oder darüber, was für den Verlauf der Kupplung ungünstig ist. Die Ausbeute erhöhende Wirkung des Calciums oder Magnesiums macht sich bei dieser Arbeitsweise nicht deutlich bemerkbar und konnte deshalb nicht erkannt werden.

Ferner sind Kupplungsreaktionen in Gegenwart von Calcium- oder Magnesiumsalzen in Lösungsmittelmischungen bekannt, vgl. z. B. CH-A-436 524. Auch bei dieser Arbeitsweise wurde die ausbeutesteigernde Wirkung des Calciums oder Magnesiums nicht erkannt. Die Salzzugabe dient lediglich zur Einstellung des pH-Wertes.

Aus der DE-A-33 36 247 ist die Diazotierung und Kupplung in Gegenwart von Calciumsalzen als kontinuierliches Verfahren bekannt. Das erfindungsgemässe diskontinuierliche Verfahren ermöglicht gegenüber dem kontinuierlichen Verfahren z. B. das Arbeiten in konzentrierteren Lösungen oder Suspensionen, die noch rührbar sind aber für die kontinuierliche Verfahrensweise nicht mehr gut pumpbar sind.

Ferner werden Calciumsalze zur Herstellung von Azopigmentfarbstoffen verwendet. Bei dieser Verfahrensweise dient die Calciumsalz-Zugabe, welche im allgemeinen nach der Kupplung erfolgt, zur Bildung des unlöslichen Calciumsalzes.

Das erfindungsgemässe Verfahren ist ein diskontinuierliches Verfahren, d. h. die Herstellung der Azofarbstoffe erfolgt partienweise.

Nach der vorliegenden Erfindung verwendet man lediglich 0,1 bis 1,0 Aequivalente eines Calcium- und/oder Magnesiumsalzes, wobei diese Salze nicht gleichzeitig eine basische Wirkung zu haben brauchen. Geeignet sind insbesondere Calcium- und/oder Magnesiumsalze, deren Anion sich von einer starken Säure ableitet, wie z. B. Magnesiumsulfat oder Calciumchlorid. Man kann aber auch mehr als 1 Aequivalent Ca oder Mg einsetzen, wobei aber nicht noch höhere Ausbeuten erreicht werden. Ausserdem wirkt sich ein Ueberschuss von Erdalkalisalzen, besonders im Falle von Calcium, in anderer Hinsicht

ungünstig aus, nämlich durch Belastung des Abwassers und störenden Salzgehalt mit unerwünschten Aussalzeffekten.

Die Verwendung von Calcium- oder Magnesiumsalzen bringt folgende Vorteile :

— Die Ausbeuten werden gesteigert.

— Das Kupplungsgemisch wird in vielen Fällen besser rührbar und es kann in höheren Konzentrationen gearbeitet werden.

Die Diazo- und Kupplungskomponenten, die nach dem neuen Verfahren miteinander umgesetzt werden können, sind die bei o,o'-Dihydroxyazofarbstoffen gebräuchlichen Phenole und Naphthole. Als Diazokomponenten kommem somit vor allem die gegebenenfalls mit Chlor, Nitro-, $C_{2-6}$-Alkanoylamino, $C_{2-6}$-Alkoxycarbonylamino-, $C_{1-6}$-Alkyl-, $C_{1-6}$-Alkoxy-, Sulfo-, Sulfonamido- oder Sulfongruppen substituierten o-Aminophenole sowie die mit Chlor, Brom, Nitro-, Sulfo-, Sulfonamid- oder Sulfongruppen substituierten o-Aminonaphthole in Frage, wie z. B. 4-Chlor-2-aminophenol-6-sulfosäure, 4-Nitro-2-aminophenol-6-sulfosäure, 4-Methyl-2-aminophenol, 4-Methoxy-2-aminophenol, 4,6-Dinitro-2-aminophenol, 4-Acetylamino-2-aminophenol-6-sulfonsäure, 2-Aminophenol-4-sulfonamid, 2-Aminophenol-4-sulfon-N,N-dimethylamid, 2-Aminophenol-4-methylsulfon, 2-Aminophenol-4-(β-hydroxyäthyl)-sulfon und insbesondere 4- oder 5-Nitro-2-aminophenol, 2-Amino-1-naphthol-4,8-disulfosäure, 1-Amino-2-naphthol-4-sulfosäure, 1-Amino-2-naphthol-4-sulfonamid, 6-Nitro-1-amino-2-naphthol-4-sulfosäure, 2-Amino-4-chlorphenol.

Geeignete Kupplungskomponenten sind Phenole, die mit $C_{1-6}$-Alkyl und/oder $C_{2-6}$-Alkanoylamino, $C_{2-6}$-Alkoxycarbonylamino substituiert sind und vor allem Naphthole, die gegebenenfalls mit Chlor, $C_{2-6}$-Alkanoylamino-, $—NH_2$, $C_{2-6}$-Alkoxycarbonylamino-, Sulfo-, Sulfonamid- oder Sulfongruppen substituiert sind, wie z. B. 4-Methylphenol, 4-t-Butylphenol, 2,4-Dimethylphenol, 2-Acetylamino-4-methylphenol, 1- oder 2-Naphthol, 1-Naphthol-3-, -4- oder -5-sulfosäure, 2-Naphthol-3-, -4-, -5-, -6-, -7- oder -8-sulfosäure, 2-Naphthol-6-sulfamid, 1-Acetylamino-7-naphthol, 1-Acetylamino-6-naphthol, 1-Propionylamino-7-naphthol, 1-Carbomethoxyamino-7-naphthol, 2-Amino-8-hydroxynaphthalin-6-sulfonsäure, 5,8-Dichlor-1-naphthol.

Als $C_{2-6}$-Alkanoylamino kommt z. B. Acetylamino, Propionylamino und Butyrylamino in Betracht.

Als $C_{2-6}$-Alkoxycarbonylamino kommt z. B. Methoxycarbonylamino und Aethoxycarbonylamino in Betracht.

Als $C_{1-6}$-Alkyl kommt z. B. Methyl, Aethyl, Propyl, Isopropyl, Butyl, sek.-Butyl, tert.-Butyl, Isobutyl, Pentyl und Hexyl in Betracht.

Als $C_{1-6}$-Alkoxy kommt z. B. Methoxy, Aethoxy, Propoxy, Isopropoxy und Butoxy in Betracht.

Als Sulfonamido kommt z. B. $—SO_2NH_2$, $—SO_2NHC_{1-6}$-Alkyl, wie z. B. $—SO_2NHCH_3$ und $—SO_2NHC_2H_5$ und $—SO_2N(C_{1-6}$-Alkyl$)_2$ wie z. B. $—SO_2N(CH_3)_2$ und $—SO_2N(C_2H_5)_2$ in Betracht.

Als Sulfon kommt z. B. $—SO_2—C_{1-6}$-Alkyl wie $—SO_2—CH_3$ und $—SO_2$-Aryl wie Phenylsulfonyl in Betracht.

Besonders bevorzugte Ausführungsformen des erfindungsgemässen Verfahrens sind dadurch gekennzeichnet, dass man

a) als Diazokomponenten gegebenenfalls mit Chlor, Nitro, $C_{1-6}$-Alkyl und/oder Sulfo substituierte o-Aminophenole oder mit Nitro und Sulfo oder nur mit Sulfo substituierte o-Aminonaphthole verwendet; und

b) als Kupplungskomponenten β-Naphthol oder ein 8-$C_{2-6}$-Alkanoylamio- oder 8-$C_{2-6}$-Alkoxycarbonylamino-2-naphthol verwendet.

Das neue Verfahren eignet sich sowohl für die Herstellung von sulfogruppenhaltigen o,o'-Dihydroxyazofarbstoffen, bei denen in Gegenwart von $Ca^{2+}$ oder $Mg^{2+}$ bei pH-Werten von 10 und weniger gearbeitet werden kann, als auch besonders für Kupplungen auf β-Naphthol oder 1-$C_{2-6}$-Alkanoylamino-oder 1-$C_{2-6}$-Alkoxycarbonylamino-7-hydroxynaphthalinen, wobei bei pH-Werten von höchstens 11,5, vorzugsweise 10,5 bis 11, gearbeitet wird.

Für die Verbesserung der Ausbeute ist es in vielen Fällen vorteilhaft, das Calcium- oder Magnesiumsalz schon vor der Kupplung zu der Diazokomponente zuzusetzen. Aus diesem Grunde wird das Verfahren vor allem mit Calcium- und Magnesiumsalzen durchgeführt, die nicht basisch wirken.

Die nach dem erfindungsgemässen Verfahren erhaltenen Farbstoffe eignen sich zur Herstellung von Metallkomplexfarbstoffen wie z. B. Chrom- oder Kobaltkomplexazofarbstoffen, wobei die Metallisierung nach an sich bekannten Methoden erfolgt.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

## Beispiel 1

Man löst 234 Teile 2-Amino-4-nitrophenol-6-sulfonsäure in Form des Natriumsalzes in 1 000 Teilen Wasser. Dann gibt man 210 Volumenteile einer 30,5 %igen Salzsäure zu und diazotiert das Amin durch Zugabe von 250 Volumenteilen einer 4N-Nitritlösung bei Raumtemperatur. Zur erhaltenen Lösung der Diazokomponente gibt man portionenweise und unter Rühren 100 Teile Calciumchlorid (wasserhaltig, auf Molekulargewicht 111 berechnet). Man stellt den pH-Wert mit Natronlauge auf 3,0 und gibt 175 Teile

4-Butylphenol gelöst in 1 000 Teilen Wasser unter Zusatz von 57 Teilen Kaliumhydroxyd zu. Der pH-Wert wird durch Zutropfen von Natronlauge auf 8,5 bis 9,0 und die Temperatur zwischen 40 und 50° gehalten. Danach wird der Azofarbstoff mit Salzsäure abgeschieden, filtriert und getrocknet. Die Ausbeute beträgt ca. 85 % der Theorie (durch komplexometrische Titration bestimmt).

Einen ähnlichen Farbstoff erhält man mit derselben Ausbeute, wenn man statt 4-Butylphenol eine äquivalente Menge 4-Amylphenol verwendet.

Wird die $CaCl_2$-Zugabe unterlassen, so sinkt die Ausbeute bei sonst gleichem Vorgehen auf weniger als die Hälfte, d. h. auf ca. 40 % der Theorie.

## Beispiel 2

308 Teile 2-Amino-5-nitrophenol werden in 2 000 Teilen Wasser unter Zusatz von Natronlauge gelöst, wobei soviel Natronlauge zugegeben wird, dass der pH-Wert zwischen 10,5 und 11,5 liegt. Danach lässt man 500 Volumenteile 4N-Nitritlösung zu der Lösung laufen und versetzt sie mit 70 Teilen $MgSO_4$. Die erhaltene Lösung wird zu 800 Teilen Wasser, 420 Volumenteilen konz. Salzsäure und 1 200 Teilen Eis zugegeben. Nach beendeter Diazotierung gibt man nochmals 100 Teile $MgSO_4$ zu, stellt das Reaktionsgemisch mit Natronlauge auf pH 2,5 bis 3 und versetzt es mit 288 Teilen β-Naphthol gelöst in 1 000 Teilen Wasser unter Zusatz von 210 Volumenteilen 10N-Natronlauge. Man rührt das Gemisch bei pH ca. 8,5 und 20 bis 25° während 6 Stunden. Danach wird der Azofarbstoff mit Salzsäure abgeschieden und abfiltriert. Man erreicht eine Ausbeute von 95 % der Theorie. Ohne Zusatz von $MgSO_4$ werden lediglich ca. 75 % der Theorie erhalten.

## Beispiel 3

343 Teile 2-Aminophenol-4-sulfomethylamid zu 100 %, als Chlorhydrat eingesetzt, werden in 2 000 Teilen Wasser, unter Zusatz von wenig Salzsäure, gelöst. Man gibt hierzu 1 700 Teile Eis und 425 Volumenteile einer 4N-Nitritlösung und rührt das Gemisch 15 Minuten bei 0 bis 5°. Nach Zerstören eines allfälligen Nitritüberschusses mit Sulfaminsäure gibt man die erhaltene Diazosuspension unter Rühren zu einem Gemisch aus 359 Teilen 1-Acetylamino-7-naphthol, in 3 000 Teilen Wasser mit 100 Teilen Calciumhydroxid. Es wird bei 60° behandelt und darauf mit 2 500 Teilen Eis versetzt. Man rührt 2 Stunden lang bei 0 bis 25° und einem pH-Wert von 10,5 bis 11. Danach wird der Farbstoff zur Zugabe von ca. 300 Teilen konzentrierter Salzsäure abgeschieden. Man erreicht eine Ausbeute von 95 % der Theorie. Wird das Naphthol mit Natronlauge statt Calciumoxyd gelöst, so erhält man nur eine Ausbeute von 75 bis 80 %. Schon 0,1 Aequivalent Calcium, als Calciumchlorid zugesetzt, verbessert die Ausbeute auf 90 % der Theorie.

## Beispiel 4

154 Teile 4-Nitro-2-aminophenol werden in 800 Teilen Wasser von 0 bis 5° unter Zusatz von 120 Teilen konzentrierter Salzsäure mit 250 Volumenteilen einer 4N-Nitritlösung diazotiert. Anschliessend wird mit 79 Teilen Calciumchlorid entsprechend 70 % der Theorie versetzt, mit wenig Natronlauge auf pH 3 eingestellt und unter Rühren ein Gemisch aus 250 Teilen 2-Amino-8-naphthol-6-sulfonsäure, in 2 000 Teilen Wasser von 10° mit 110 Teilen 10N-Natronlauge gelöst, zugegeben. Das Kupplungs-pH wird mit ca. 100 Teilen 10N-Natronlauge bei pH ca. 8,5 konstant gehalten, während die Temperatur von ca. 10 auf 20° ansteigt. Nach etwa 5 Stunden ist die Kupplung beendet, wobei — durch chelatometrische Titration mit Kupfer bestimmt — eine Ausbeute von 90 bis 94 % der Theorie erhalten wird. Ohne Zusatz von Calcium wurde eine Ausbeute von 68 % der Theorie gefunden.

Wenn man wie in den Beispielen 1 bis 4 angegeben verfährt, jedoch die in der folgenden Tabelle in Spalte 2 angegebenen Diazokomponenten, die in Spalte 3 angegebenen Kupplungskomponenten und die in Spalte 4 angegebenen Calcium- oder Magnesiumsalze verwendet, so erhält man ebenfalls Farbstoffe in deutlich höherer Ausbeute als ohne Zusatz von Calcium- oder Magnesiumsalzen.

(Siehe Tabelle Seite 5 f.)

Tabelle

| Beispiel | Diazokomponente | Kupplungskomponente | Calcium- oder Magnesiumsalz | Kupplungs-pH |
|---|---|---|---|---|
| 5 | 231 Teile 2-Amino-5-nitrophenol und 193 Teile 2-Amino-4-nitrophenol | 403 Teile 2-Naphthol | 102 Teile $MgCl_2$ | 10 |
| 6 | 308 Teile 2-Amino-5-nitrophenol | 300 Teile 2-Naphthol | 149 Teile $MgCl_2$ | 8,5-9 |
| 7 | 767 Teile 1-Amino-2-hydroxy-6-nitronaphthalin-4-sulfonsäure | 432 Teile 2-Naphthol | 209 Teile $CaCl_2$ | 9,8-10 |
| 8 | 702 Teile 2-Amino-1-hydroxy-4-nitrobenzol-6-sulfonsäure | 450 Teile 2-Naphthol | 231 Teile $MgCl_2$ | 9-9,5 |
| 9 | 97 Teile 2-Amino-4-chlorphenol | 151 Teile 5,8-Dichlor-1-naphthol | 13 Teile $MgCl_2$ | 11,5 |
| 10 | 35 Teile 2-Amino-5-nitrophenol | 32 Teile 2-Naphthol | 9 Teile $MgSO_4$ | 9,5 |

## Patentansprüche

1. Verfahren zur diskontinuierlichen Herstellung von Azofarbstoffen der Formel

$$\overset{OH}{\overset{|}{A}} - N = N - \overset{OH}{\overset{|}{B}}$$

worin A—OH der Rest eines durch Chlor, Nitro, $C_2$-$C_6$-Alkanoylamino, $C_2$-$C_6$-Alkoxycarbonylamino, $C_1$-$C_6$-Alkyl, $C_1$-$C_6$-Alkoxy, Sulfo, Sulfonamid oder Sulfongruppen substituierten Phenols oder der Rest eines durch Chlor, Brom, Nitro, Sulfo, Sulfonamid oder Sulfongruppen substituierten Naphthols ist, und B—OH der Rest eines durch $C_1$-$C_6$-Alkyl und/oder $C_2$-$C_6$-Alkanoylamino oder $C_2$-$C_6$-Alkoxycarbonylamino substituierten Phenols oder der Rest eines durch Chlor, —$NH_2$, $C_2$-$C_6$-Alkanoylamino, $C_2$-$C_6$-Alkoxycarbonylamino, Sulfo, Sulfonamid oder Sulfongruppen substituierten Naphthols ist, wobei diese Reste in o-Stellung zu den Hydroxygruppen an die Azogruppe gebunden sind, dadurch gekennzeichnet, dass man in wässriger Lösung ein Amin der Formel

$$\overset{OH}{\overset{|}{A}} - NH_2$$

diazotiert und in Gegenwart von 0,1 bis 1,0 Aequivalenten von $Ca^{2+}$- und/oder $Mg^{2+}$-Ionen auf eine Kupplungskomponente der Formel

$$H - \overset{OH}{\overset{|}{B}}$$

kuppelt, wobei der pH-Wert, für den Fall, dass B eine Sulfogruppe enthält, zwischen 8 und 10 und für den Fall, dass B keine Sulfogruppe trägt, nicht oberhalb 11,5 liegt.

2. Verfahren gemäss Anspruch 1, dadurch gekennzeichnet, dass man Calcium- und/oder Magnesiumsalze verwendet, deren Anion sich von einer starken Säure ableitet.

3. Verfahren gemäss Ansprüchen 1 und 2, dadurch gekennzeichnet, dass man das Calcium- und/oder Magnesiumsalz schon vor der Kupplung zur Lösung der Diazokomponente gibt.

4. Verfahren gemäss Ansprüchen 1 bis 3, dadurch gekennzeichnet, dass man als Kupplungskomponenten β-Naphthol oder ein 8-$C_{2-6}$-Alkanoylamino- oder 8-$C_{2-6}$-Alkoxycarbonylamino-2-naphthol verwendet.

5. Verfahren gemäss Ansprüchen 1 bis 4, dadurch gekennzeichnet, dass man die Kupplung auf β-Naphthol oder 1-($C_{2-6}$-Alkanoylamino- oder $C_{2-6}$-Alkoxycarbonylamino)-7-hydroxynaphthalin bei einem pH von 10,5 bis 11 durchführt.

## Claims

1. A process for the batchwise preparation of an azo dye of the formula

$$\overset{OH}{\overset{|}{A}} - N = N - \overset{OH}{\overset{|}{B}}$$

in which A—OH is the radical of a phenyl substituted by chlorine, nitro, $C_2$-$C_6$alkanoylamino, $C_2$-$C_6$alkoxycarbonylamino, $C_1$-$C_6$alkyl, $C_1$-$C_6$alkoxy, sulfo, sulfonamide or sulfone groups or the radical of a naphthol substituted by chlorine, bromine, nitro, sulfo, sulfonamide or sulfone groups, and B—OH is the radical of a phenyl substituted by $C_1$-$C_6$alkyl and/or $C_2$-$C_6$alkanoylamino or $C_2$-$C_6$alkoxycarbonylamino, or the radical of a naphthol substituted by chlorine, —$NH_2$, $C_2$-$C_6$alkanolylamino, $C_2$-$C_6$alkoxycarbonylamino, sulfo, sulfonamide or sulfone groups, these radicals being attached to the azo group in the ortho-position relative to the hydroxyl groups, which process comprises diazotising in aqueous solution an amine of the formula

$$\overset{OH}{\overset{|}{A}} - NH_2$$

and in the presence of 0.1 to 1.0 equivalent of $Ca^{2+}$ and/or $Mg^{2+}$ ions coupling the product with a coupling component of the formula

$$\begin{array}{c} \quad OH \\ \quad | \\ H - B \end{array}$$

where if B contains a sulfo group, the pH is between 8 and 10, and if B does not carry a sulfo group, the pH is not above 11.5.

2. A process according to claim 1, which comprises employing a calcium and/or magnesium salt the anion of which is derived from a strong acid.

3. A process according to either of claims 1 and 2, which comprises adding the calcium and/or magnesium salt to the solution of the diazo component before the coupling.

4. A process according to any one of claims 1 to 3, wherein the coupling component used is β-naphthol or an 8-$C_{2-6}$-alkanoylamino- or 8-$C_{2-6}$alkoxycarbonylamino-2-naphthol.

5. A process according to any one of claims 1 to 4, wherein the coupling with β-naphthol or 1-($C_{2-6}$alkanoylamino- or $C_{2-6}$alkoxycarbonylamino)-7-hydroxynaphthalene is carried out at a pH of 10.5 to 11.

**Revendications**

1. Procédé pour la préparation, en mode discontinu, de colorants azoïques de formule

$$HO—A—N=N—B—OH$$

dans laquelle A—OH représente le reste d'un phénol substitué par des groupes chloro, nitro, alcanoylamino en $C_2$-$C_6$, alkoxycarbonylamino en $C_2$-$C_6$, alkyle en $C_{1-6}$, alcoxy en $C_{1-6}$, sulfo, sulfamyle ou sulfonyle, ou le reste d'un naphtol substitué par des groupes chloro, bromo, nitro, sulfo, sulfamyle ou sulfonyle, et B—OH représente le reste d'un phénol substitué par des groupes alkyle en $C_1$-$C_6$ et/ou alkanoylamino en $C_2$-$C_6$ ou alcoxycarbonylamino en $C_2$-$C_6$, ou le reste d'un naphtol substitué par des groupes chloro, —$NH_2$, alkanoylamino $C_2$-$C_6$, alcoxycarbonylamino en $C_2$-$C_6$, sulfo, sulfamyle ou sulfonyle, ces restes étant liés au groupe azo en position ortho par rapport au groupe hydroxyle, ce procédé étant caractérisé en ce que l'on diazote, en solution aqueuse, une amine de formule

$$HO—A—NH_2$$

et qu'on la fait copuler, en présence de 0,1 à 1,0 équivalent d'ions $Ca^{2+}$ et/ou $Mg^{2+}$, sur un composant de copulation de formule

$$H—B—OH$$

le pH étant situé entre 10 et 8 dans le cas où B contient un groupe sulfo, et ne dépassant pas 11,5 dans le cas où B ne contient aucun groupe sulfo.

2. Procédé conforme à la revendication 1, caractérisé en ce que l'on utilise des sels de calcium et/ou de magnésium dont l'anion dérive d'un acide fort.

3. Procédé conforme aux revendications 1 et 2, caractérisé en ce que l'on ajoute le sel de calcium et/ou de magnésium à la solution de composant diazo, dès avant la copulation.

4. Procédé conforme aux revendications 1 à 3, caractérisé en ce que l'on utilise comme composant de copulation le β-naphtol ou un 8-(alkanoylamino en $C_{2-6}$)-2-naphtol ou un 8-(alcoxycarbonylamino en $C_{2-6}$)-2-naphtol.

5. Procédé conforme aux revendications 1 à 4, caractérisé en ce que l'on effectue la copulation sur le β-naphtol ou un 1-(alkanoylamino en $C_{2-6}$ ou alcoxycarbonylamino en $C_{2-6}$)-7-hydroxynaphtalène, à un pH de 10,5 à 11.